Europäisches Patentamt

European Patent Office

Office européen des brevets

(19)

(11) Veröffentlichungsnummer: **0 270 052 B1**

## (12) EUROPÄISCHE PATENTSCHRIFT

(45) Veröffentlichungstag der Patentschrift: **23.10.91**

(21) Anmeldenummer: **87117679.8**

(22) Anmeldetag: **30.11.87**

(51) Int. Cl.⁵: **A01D 80/00**, A01D 78/10, A01D 69/08

(54) Heuwerbungsmaschine.

(30) Priorität: **02.12.86 DE 3641116**

(43) Veröffentlichungstag der Anmeldung:
**08.06.88 Patentblatt 88/23**

(45) Bekanntmachung des Hinweises auf die
Patenterteilung:
**23.10.91 Patentblatt 91/43**

(84) Benannte Vertragsstaaten:
**AT CH DE FR LI NL**

(56) Entgegenhaltungen:
DE-A- 1 482 768       DE-A- 2 802 572
DE-A- 3 031 837       DE-A- 3 211 579
FR-A- 1 314 335       GB-A- 1 154 927

(73) Patentinhaber: **Alois Pöttinger Maschinenfabrik GmbH**

**A-4710 Grieskirchen(AT)**

(72) Erfinder: **Leposa, Wolfgang**
**Sonnfeldsiedlung 30**
**A-4710 Grieskirchen(AT)**
Erfinder: **Grossauer, Harald**
**Mayrfeld 3**
**A-4710 Grieskirchen(AT)**

(74) Vertreter: **Dupal, Helmut, Dipl-Ing.**
**Jägerweg 12**
**A-4702 Wallern(AT)**

## Beschreibung

Die Erfindung betrifft eine Heuwerbungsmaschine nach dem Gattungsbegriff des Anspruches 1.

Maschinen dieser Art umfassen insbesonders Mähwerke, Zetter und Schwader, bei denen entweder hohe Anforderungen an genaue Bodenanpassung bestehen oder wegen größerer Arbeitsbreiten diese besonders beachtet werden muß. In beiden Fällen wird die Arbeitsqualität der Maschinen dadurch stark beeinflußt. Bei Maschinen der genannten Art ist es möglich die Verkleinerung der Arbeitsbreite der Maschinen auf Transportbreite auch bei irrtümlich noch laufendem Antrieb vorzunehmen.

In der DE-A-30 31 837 ist eine solche Heuwerbungsmaschine zum Zetten beschrieben, bei der die Getriebe der Rechorgane von Antriebswellen angetrieben sind, die in den Teilrahmen angeordnet, an den Gelenkstellen zwischen den Teilrahmen mit Doppelkreuzgelenken verbunden sind, wobei die Schwenkachsen an den Gelenkstellen bei gestreckter Lage der Teilrahmen zueinander die Doppelkreuzgelenke oberhalb derselben kreuzen. Dadurch wird es möglich die äußeren Teilrahmen nach oben hin bis über den mittleren Teilrahmen der Maschine zu verschwenken, wobei gleichzeitig die freie Drehbarkeit der Antriebswellen über die Doppelkreuzgelenke erhalten bleibt, so daß Beschädigungen der Maschine vermieden werden, wenn auf ein Abschalten des Antriebs vor dem Verschwenken der Teilrahmen vergessen wurde. Es ist aber mit dieser Anordnung nicht möglich die Teilrahmen in nennenswertem Maße zum Boden hin zu verschwenken, weil dann die Gelenke der Antriebswellen überlastet würden. Besonders beim Bearbeiten von hängigem oder stark unebenem Gelände können sich dadurch Störungen oder sogar Beschädigungen der Maschine ergeben.

In der GB-A-11 54 927 ist eine Anordnung für einen Rasenmäher beschrieben, bei dem zwei Kreuzgelenke durch Schiebewellen miteinander verbunden ein Gelenk von Antriebswellen zwischen zwei gelenkig miteinander verbundenen Maschinenrahmenteilen bilden, das jedoch außen am Maschinenrahmen verlaufend Antriebswellen aufweist, wobei das Gelenk mit dem Maschinenrahmen über einen Lenker gelenkig verbunden ist. Diese Anordnung, die bei professionellen Heuwerbungsmaschinen wegen Verletzung- Verschmutzungs- und Betriebsstörungsgefahr nicht anwendbar ist, erlaubt das Verschwenken der Maschinenrahmenteile zueinander nach oben und unten über einen großen Abwinkelungsbereich.

Eine Abwinkelung über einen geringeren Abwinkelungsbereich zwischen den Maschinenteilen einer Maschine zum Schwadenziehen, bei der die Antriebswellen im Maschinenrahmen geführt sind und ihre gelenkige Verbindung zwischen den gabelförmigen Enden der gelenkig verbundenen Maschinenrahmenteile angeordnet ist, ist bei einer Maschinenanordnung möglich, wie sie in der DE-A-32 11 579 beschrieben und dargestellt ist.

Die Gelenksverbindung besteht dabei aus einem einfachen Kreuzgelenk, in dessen Akialebene, die von den Gelenkachsen des Kreuzgelenkes gebildet wird, die Gelenkachse der Maschinenrahmenteile liegt und die Längsachsen der Antriebswellen schneidet. Diese Anordnung ist aber für eine starke Abwinkelung nach oben, für die Umstellung der äußeren Maschinenrahmenteile in eine nach oben gerichtete Transportlage nicht geeignet, weil es bereits vorher sperrt und damit zu Betriebsstörungen und Schäden Anlaß gibt.

Bei erfindungsgemäßer Ausbildung einer Heuwerbungsmaschine nach Anspruch 1 wird dieser Nachteil vermieden und eine bessere Bodenanpassung für die Maschine erzielt.

Die Unteransprüche betreffen besonders vorteilhafte Ausgestaltungen der Erfindung. Besonders günstig ist es die verschwenkbaren Teilrahmen zu verschwenken und deren Verschwenkung zur Bodenanpassung im wesentlichen senkrecht zum Boden zu gestalten.

Einfache Verbindungen der Teilrahmen ergeben sich bei gabelförmiger, übergreifender Ausbildung der Enden der Teilrahmen. Bei aufrechten Stützachsen der Maschine ist es am günstigsten die Schwenkachse in einer zu den Stützachsen senkrechten Ebene anzuordnen.

Bei Anwendung eines Doppelkreuzgelenkes wird dieses günstigerweise beiderseits verschiebbar mit den Antriebswellen gekuppelt, weil dadurch ein besonders günstiger Kräfteausgleich im Doppelkreuzgelenk stattfinden kann, wodurch Störungen oder Beschädigungen vermieden werden.

Im folgenden werden Ausführungsbeispiele der Erfindung an Hand der Zeichnung beschrieben:
Es zeigt:

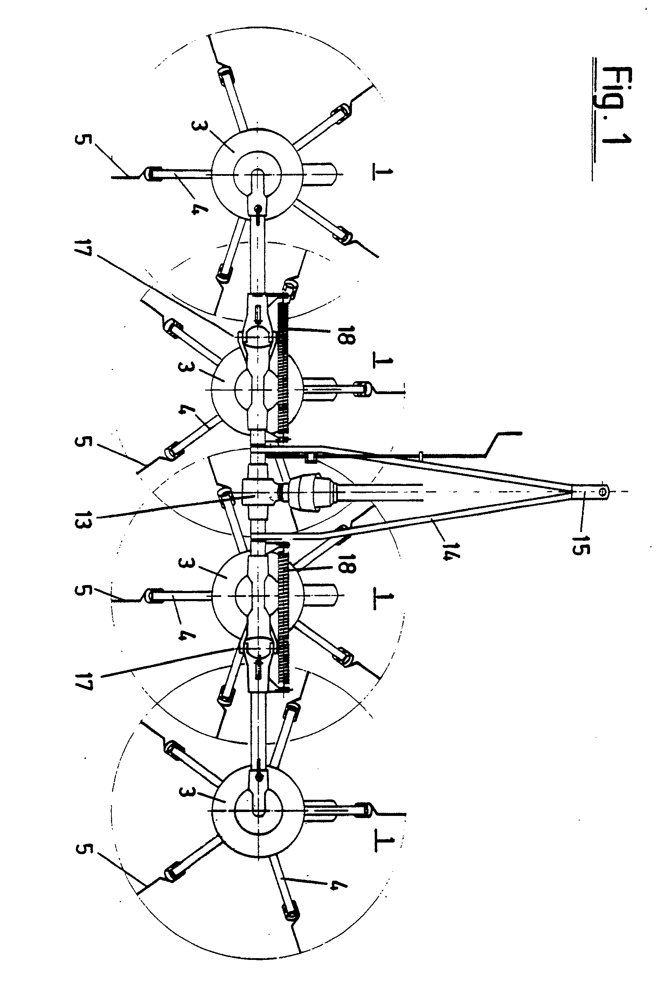

Fig. 1     eine Heuwerbungsmaschine in Draufsicht in Arbeitsstellung,

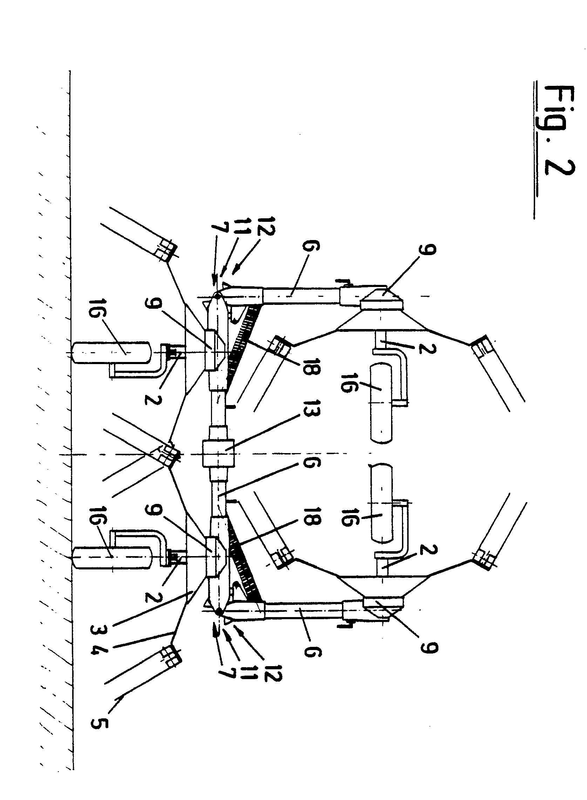

Fig. 2     eine Heuwerbungsmaschine. in Rückansicht ind Transportstellung,

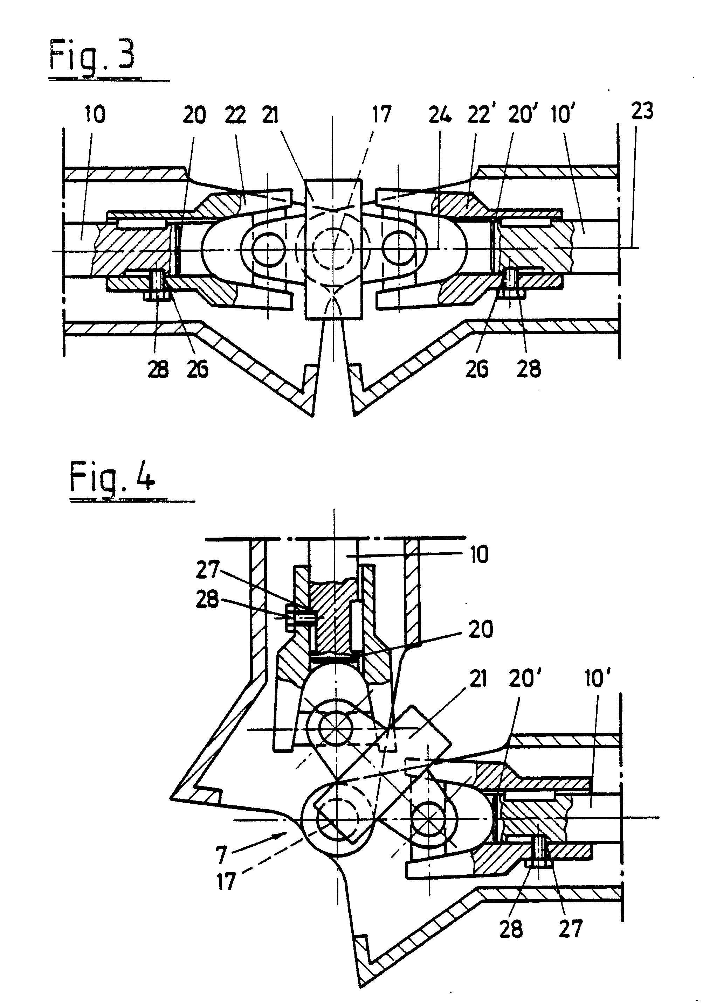

Fig. 3     eine Gelenkverbindung mit symmetrischer Anordnung eines Doppelkreuzgelenkes und

Fig. 4     diese Gelenkverbindung in abgewinkelter Stellung, geschnitten.

Die Heuwerbungsmaschine besitzt Rechorgane, die von vier Rechrädern 1 gebildet sind, die um aufrechte Achsen 2 umlaufen und an deren Radnabe 3 Zinkentragarme 4 befestigt sind, an deren äußeren Enden die Rechzinken 5 angebracht sind. Die Rechräder 1 sind an Teilrahmen 6 gelagert, die untereinander mit Gelenken 7 verbunden sind und werden über Getriebe angetrieben, die in Getriebegehäusen 9 eingebaut sind und ihrerseits von Antriebswellen 10,10' angetrieben sind, die an den Gelenkstellen 11 der Teilrahmen 6 mit Gelenken 12 verbunden sind und in den Teilrahmen 6 gelagert sind. Der innere Teilrahmen 6 trägt das Eingangsgetriebe 13 mit dem Zapfwellenanschluß, sowie den Zugbalken 14 mit der Anhängevorrichtung 15 für ein Zugfahrzeug.

Die Rechräder 1 sind über Stützräder 16, die an deren Achsen 2 angebracht sind, auf dem Boden abgestützt.

Die äußeren Teilrahmen 6 sind um Schwenkachsen 17 der Gelenke 7, die auf die Achsen 2 senkrecht stehen, über deren innere Teilrahmen 6 verschwenkbar angeordnet, wobei die Federn 18 zur Gewichtsentlastung dienen.

Die Gelenke 7 sind an den einander zugewandten Enden 8,8' einander gabelförmig übergreifend ausgebildet, wobei die beiden Gabelseiten jeweils mit einem Schwenkbolzen 19 in der Schwenkachse 17 verbunden sind.

Das Gelenk 12 zwischen den Enden 20,20' der Antriebswellen 10,10' ist als Doppelkreuzgelenk 21 ausgebildet, das an Enden 20,20' befestigt ist und in Bezug die Schwenkachse 17 des Gelenkes 7 symmetrisch angeordnet ist, wobei die Schwenkachse 17 in einer durch die Mittelachsen 24 der Antriebswellen 10,10' in gestreckter Lage der Teilrahmen 6 gelegenen Ebene 23 angeordnet ist und die Mittelachsen 24 senkrecht schneidet.

Bei symmetrischer Anordnung des Doppelkreuzgelenkes 21 ist dieses mit beiden Enden 20,20' der Antriebswellen 10,10' in der zuletzt beschriebenen Weise verbunden, wobei jeweils ein innerer Anschlag 26 und ein äußerer Anschlag 27 in Form einer Nut vorgesehen ist, in die eine Anschlagschraube 28 eingreift.

**Patentansprüche**

1. Heuwerbungsmaschine mit einem aus mehreren mit Gelenken (7) gekuppelten, gegeneinander verschwenkbaren Teilrahmen (6) bestehenden Gesamtrahmen, an dem antreibbare Arbeitsorgane angeordnet sind, die von einem Eingangsgetriebe (13) aus, über im Rahmen geführte Antriebswellen (10,10'), die untereinander mit Doppelkreuzgelenken (21) gekuppelt sind, angetrieben werden, dadurch gekennzeichnet, daß die Schwenkachse (17) jedes Gelenkes (7) in gestreckter Lage der Teilrahmen (6) zueinander in einer, durch die fluchtenden Mittelachsen (24) der Antriebswellen (10,10') gehenden Ebene (23) liegt und die Mittelachsen (24) in Querrichtung senkrecht zu den Mittelachsen (24) der Antriebswellen (10,10') ausgerichtet schneidet und das Doppelkreuzgelenk (21) symmetrisch zur Schwenkachse (17) zwischen die Antriebswellen (10,10') eingesetzt ist und an den Enden (20,20') beider Antriebswellen (10,10') zwischen Anschlägen (26 und 27) verschiebbar gekuppelt ist.

2. Heuwerbungsmaschine nach Anspruch 1, dadurch gekennzeichnet, daß die Ebene (23) der Schwenkachse (17) im wesentlichen parallel zum Boden ausgerichtet ist.

3. Heuwerbungsmaschine nach Anspruch 1, dadurch gekennzeichnet, daß das Gelenk (7) aus zwei gabelförmig übergreifenden Enden (8,8') der Teilrahmen (6) und aus mit der Schwenkachse fluchtenden Schwenkbolzen (19) besteht.

4. Heuwerbungsmaschine nach Anspruch 1 oder 2, dadurch gekennzeichnet, daß die Ebene (23) der Schwenkachse (17) bei aufrechten Achsen (2) der Arbeitsorgane auf diese senkrecht ausgerichtet ist.

**Claims**

1. A haymaking device comprising an overall frame formed by a plurality of subframes (6), which are coupled via hinge joints (7) and are pivotable relative to one another, drivable working elements being arranged on the overall frame, which working elements are driven by an input gearbox (13) via drive shafts (10, 10'), which are guided in the frame and are coupled with one another via universal joints (21), characterised in that, in the extended position of the subframes (6) relative to one another, the pivoting axis (17) of each hinge joint (7) lies in a plane (23) passing through the flushing central axes (24) of the drive shafts (10, 10') and intersects the central axes (24) in the transverse direction perpendicular to the central axes (24) of the drive shafts (10, 10') and the universal joint (21) is arranged symmetrical to the pivoting axis (17) between the drive shafts (10, 10') and is coupled to the ends (20, 20') of both drive shafts (10, 10') so as to be displaceable between abutments (26 and 27).

2. A haymaking device according to claim 1, characterised in that the plane (23) of the pivoting axis (17) is aligned substantially parallel to the ground.

3. A haymaking device according to claim 1, characterised in that the hinge joint (7) is formed by two fork-shaped overlapping ends (8, 8') of the subframes (6) and by pivoting bolts (19) which are flush with the pivoting axis.

4. A haymaking device according to claim 1 or 2, characterised in that the plane (23) of the pivoting axis (17) is arranged perpendicular to the axes (2) of the working elements when said axes are upright.

**Revendications**

1. Machine pour la fenaison comportant un châssis général constitué par plusieurs châssis partiels (6) basculables les uns par rapport aux autres, accouplés par des articulations (7), châssis général sur lequel sont agencés des organes de travail commandables, qui sont entraînés par un engrenage d'entrée (13) par l'intermédiaire d'arbres de commande (10, 10') guidés dans le châssis, lesquels sont accouplés entre eux par des articulations à double croisement (21), machine caractérisée en ce que l'axe de basculement (17) de chaque articulation (7) se situe dans la position étirée ou sortie des châssis partiels (6) dans un plan (23) traversant les axes médians (24) alignés des arbres de commande (10, 10') et coupe les axes médians (24) dans la direction transversale perpendiculaire aux axes médians (24) dirigés vers les arbres de commande (10, 10') et l'articulation à double croisement (21) est agencée symétriquement par rapport à l'axe de basculement (17) entre les arbres de commande (10, 10') et elle est accouplée sur les extrémités (20, 20') des deux arbres de commande (10, 10') entre les butées (26 et 27) de façon déplaçable.

2. Machine pour la fenaison selon la revendication 1, caractérisée en ce que le plan (23) de l'axe de basculement (17) est dirigé de façon sensiblement parallèle au sol.

3. Machine pour la fenaison selon la revendication 1, caractérisée en ce que l'articulation (7) consiste en deux extrémités (8, 8') en forme de fourche se chevauchant ou s'imbriquant, des châssis partiels (6), et en des pivots de basculement (19) alignés sur l'axe de basculement.

4. Machine pour la fenaison selon la revendicatoin 1 ou 2, caractérisée en ce que lorsque les axes (2) des organes de commande sont en position verticale, le plan (23) de l'axe de basculement (17) est dirigé perpendiculairement à ceux-ci.

Fig. 1

Fig. 2

# Fig. 3

# Fig. 4